# EUROPEAN PATENT SPECIFICATION

(11) **EP 1 458 827 B1**
(45) Date of publication and mention of the grant of the patent: **10.01.2007**
(21) Application number: 02792894.4
(22) Date of filing: 04.12.2002
(51) Int. Cl.: C09D 175/04, C08G 18/08, C08G 18/12, C08G 18/38

(54) **AQUEOUS COATING COMPOSITIONS CONTAINING POLYURETHANE-ACRYLIC HYBRID POLYMER DISPERSIONS**
WÄSSRIGE BESCHICHTUNGSZUSAMMENSETZUNGEN DIE POLYURETHANACRYLHYBRIDPOLYMERDISPERSIONEN ENTHALTEN
COMPOSITIONS AQUEUSES POUR ENDUCTION CONTENANT DES DISPERSIONS DE POLYMERE HYBRIDE DE POLYURETHANNE-ACRYLIQUE

(30) Priority: 21.12.2001 GB 0130651
(43) Date of publication of application: 22.09.2004
(73) Proprietor: IMPERIAL CHEMICAL INDUSTRIES PLC, London W1U 3AN (GB)
(72) Inventor: Williams, Neal, Warfield Berkshire RG42 3JN (GB)
(86) International application number: PCT/EP2002/013757
(87) International publication number: WO 2003/054093

(56) References cited:
- EP-A- 0 647 662
- US-A- 4 198 330
- US-A- 5 827 931
- DATABASE WPI Week 9612 Derwent Publications Ltd., London, GB; AN 1996-112681 XP002242728 "Urethane diol manufactured for paint, adhesive and binder in mild conditions- by reacting aliphatic diamine and cyclic alkylene carbonate in water as solvent" & JP 08 012642 A (NIPPON SHOKUBAI), 16 January 1996 (1996-01-16)

## Description

This invention relates to aqueous coating compositions, especially paint coatings, including lacquers, varnishes, emulsion paints, woodstains and adhesives and inks containing polyurethane-acrylic hybrid polymer dispersions. It also relates to aqueous dispersions of polyurethane-acrylic polymer particles for use in such compositions and to urethane prepolymers.

Paint coating compositions are surface protective and/or decorative coatings which when applied to substrates and allowed to dry and/or cure form continuous films which protect and/or decorate the substrate. The substrates vary widely including metals, wood, plastics and plaster. In some applications it is desirable for the paint to crosslink or cure in order to provide the necessary protective properties. Industrial paint coating compositions such as those used in coating metal containers or motor vehicles are usually crosslinkable as this enables the final properties of the dried film to develop rapidly.

Paint coating compositions are commonly used in coating interior and exterior surfaces found in buildings where the surfaces are usually coated at ambient temperatures of say 5 to 40°C. Such compositions are often called "architectural" coating compositions. Typically, architectural coatings are applied by brush, roller, pad or spray and are 'air-drying'. By air-drying is meant that the coating is fluid enough to flow out on the surface to which it is applied to produce a smooth, even and continuous film and is converted to a dry solid coating by loss of the carrier liquid, usually water in the case of an aqueous coating composition or organic solvent in a solventbome coating composition.

Users of architectural paints prefer to use aqueous paints because they have very little or a complete absence of organic solvents and so in use release few or no unpleasant odours.

Architectural paints are often applied to surfaces which in normal use are exposed to wear and to substances which may permanently stain the dried, solid coating if not immediately removed following, for instance a spillage. For example, varnishes applied to floors are constantly exposed to abrasion whilst pigmented paint coatings and indeed varnishes applied to surfaces such as walls and window sills may have accidental spillages of tea or coffee on them. In such circumstances it is important that the paint coating is not permanently stained, damaged or degraded.

Clear or unpigmented paint coatings, such as varnishes typically comprise an organic polymer binder and various paint additives such as thickeners and flow additives. Decorative, coloured coatings may additionally contain pigments and fillers. Such pigments and fillers may be organic or inorganic and are used to produce both colour and opacity as well as contributing to hardness. The polymeric binder binds together any dispersed inorganic material, such as pigments or fillers, and also provides adhesion to the substrate.

The nature of the polymeric binder is a major factor in determining the properties of the dry, solid paint coating. This is especially so when the paint dries exclusively by solvent loss without crosslinking or curing.

There are many types of aqueous binders suitable for formulating aqueous coating compositions. Broadly, they may be divided into two categories; namely solution polymers and dispersion polymers. The solution polymers are so named because the binders are dissolved in an aqueous medium being substantially water. The main disadvantage of these polymers is that the resulting binder solution is high in viscosity and consequently coatings or adhesives formulated from them usually have to be low in solids content in order to be conveniently applicable to the substrate. Furthermore, the water solubility of such binders results in the final dried coating being poor in its water and stain resistance. Alternatively, the dispersion polymers normally comprise sub micron sized particles suspended in aqueous medium, usually water or water and small amounts of organic solvent. Such dispersions are also known as latices or emulsions. The particles of polymeric binder can comprise, for instance the polyacrylates and polymethacrylates usually referred to as acrylics and made using known methods by addition polymerisation of the esters of acrylic and/or methacrylic acid in water. The particles may alternatively comprise polyurethane made by known methods of reacting polyol with isocyanates. Such methods can be found in the article by J.W.Rosthauser and K.Nachtkamp titled 'Waterborne Polyurethanes' in 'Advances in Urethane Science and Technology', volume 10 published in 1987 and edited by K.C.Frisch and D.Klempner, the contents of which article are herein incorporated by reference.

The polyurethane polymers are an important class of binders for aqueous coating compositions, as they produce excellent properties, such as chemical, stain and water resistance and toughness in the dried paint or adhesive. These polymers often contain significant portions of urea groups as a result of the chain extension stage (so called because molecular weight increases as a result) during their manufacture. Nevertheless, for the purposes of this specification the term polyurethane is intended to cover both polyurethane polymers and polyurethane-ureas. In any case, the variety of the polyurethanes polymers as binders is restricted by the limited range of the different isocyanates available to react with the polyol. In addition, the manufacture of these isocyanates also involves handling hazards and the care and containment necessary in making these materials inevitably results in additional cost and consequently the use of polyurethane derived from such isocyanates tends to be limited to high performance, specialised coatings only.

The polyacrylates and polymethacrylates, often referred to as acrylic dispersions are also useful polymers as binders in aqueous coatings. A wide range of acrylic dispersions of differing polymer compositions is available, with properties that are complementary to those of the polyurethane dispersions, and at significantly lower cost. Monomers comprising the esters of acrylic and methacrylic acid are often copolymerised with other vinyl monomers such as styrene with the resulting copolymer dispersions being referred to as acrylic. For the purposes of this specification it is intended that the use of the term acrylic includes such copolymers.

In order to get the best balance of properties at a reasonable cost, mixtures of polyurethane and acrylic polymer dispersions are known. These contain particles of acrylic polymer and separately, polyurethane particles. However, such mixing produces a physical blend of the separately formed aqueous dispersions of polyurethane and acrylic polymers resulting in an unstable mixture of particles which over time separate and/or flocculate and in any event become unstable and eventually unusable.

In order to achieve the required stability it is necessary that each particle comprises a mixture of closely associated polyurethane and acrylic rather than the blend of different particles referred to above. Dispersions containing polyurethane-acrylic hybrid particles can be made by known methods. Such methods can be found in United States patent specification US 4,198,330 published in April 1980, the contents of which are herein incorporated by reference.

Such aqueous dispersions of polyurethane-acrylic hybrid particles however are equally restricted in the composition of the polyurethane polymer that can be made by virtue of the limited range of isocyanates commercially available.

US 5,001,210 describes a method of preparing polyurethane polymers by reacting a urethane diol with a di- or a polyisocyanate, the urethane diol being prepared by the reaction of a di- or polyamine and a cyclic carbonate, such as propylene carbonate. These polymers are suitable for use in biomedical applications. Preparing the urethane diol from these reactants rather than the known route using polyol and polyisocyanate enables a greater variation of polyurethane compositions to be made. However, such polyurethane polymers are not useable in aqueous coating compositions as they are made at 100% solids, that is in the absence of any solvent or carrier liquid, and consequently cannot be conveniently converted into aqueous particle dispersions for use in coatings. In any case, the polyurethane polymer does not contain any acid to facilitate dispersion. Furthermore, the polymer formed is polyurethane, and indeed urea free, rather than a polyurethane-acrylic hybrid.

It has now been found that improved aqueous coating compositions can be made containing aqueous dispersions of polyurethane-acrylic hybrid polymer particles made by reacting urethane diols - prepared from a cyclic carbonate with a compound containing an amino group and a further group selected from amino and hydroxy - with a polyisocyanate.

An object of this invention is to provide aqueous coating compositions containing dispersions of polyurethane-acrylic hybrid particles which compositions produce dried coats of improved properties, especially abrasion, water and stain resistance. Another object is to provide dispersions of polyurethane-acrylic hybrid polymer particles suitable for use in such compositions. A further object is to provide urethane prepolymers for use in making the polyurethane-acrylic hybrid polymer particles.

Accordingly, there is provided an aqueous coating composition containing polymeric binder comprising particles of polyurethane-acrylic hybrid polymer dispersed in aqueous medium, containing
i) polyurethane polymer, preferably from 0.1 to 75 wt%
ii) copolymer of ethylenically unsaturated addition copolymerisable monomers, preferably from 25 to 99.9 wt%
characterised in that the polyurethane polymer is the reaction product of
a) a polyisocyanate
b) a compound containing at least two moieties reactive with the isocyanate moieties of the polyisocyanate
c) a compound containing at least one dispersing moiety and at least one moiety reactive with the isocyanate moieties of the polyisocyanate
d) a chain extender compound
e) a urethane diol, being the reaction product of a cyclic carbonate and a compound containing an amino group and a further group selected from amino and hydroxy, said urethane diol comprising up to 80wt% of the polyurethane polymer.

Throughout this specification and unless otherwise specified, it is to be understood that references to compounds or reactants in the singular are intended to include, additionally and alternatively, mixtures of said compounds or reactants.

The advantages of such coating compositions over known coatings is that the properties of the dried coating, abrasion, water and stain resistance in particular in the case of paint coatings, are significantly improved. Additionally, they offer a wider range of polyurethane-acrylic hybrid dispersions available at reasonable cost.

The particles of polyurethane-acrylic polymer are hybrid particles whereby each particle contains both polyurethane polymer and acrylic polymer. These can be core-shell type particle where one of the polymers forms the outer portion, or shell of the particle and the other the inner portion or core. Alternatively and additionally 'current bun' type particles can result, where one polymer immiscible in a second polymer exists as inclusions within particles of that second polymer. Hybrid particles can also be formed in which the polymers are intimately mixed within. The precise nature of the particle architecture is determined by the surface energy characteristics of the polyurethane and acrylic polymer. Preferably the polymers are of the core-shell type with the polyurethane portion forming the shell.

The weight average mean diameter of the particles is preferably less than 1000 nm, more preferably from 30 to 650 nm and most preferably from 60 to 350 nm.

Suitable examples of compounds containing an amino group and a further group selected from amino and hydroxy include diamines, alkanolamines and amine terminated polyamides or polyethers. Mixtures of such compounds can also be used.

Diamines are compounds which contain two amine groups. Suitable examples of diamines include the linear diamines such as hydrazine, ethylene diamine, 1,2 propane diamine, 1,3 propane diamine, 1,4 butane diamine, 1,5 pentane diamine, 1,6 hexane diamine, 1,7 heptane diamine, 1,8 octane diamine, 1,10 decane diamine and 1,12 dodecane diamine. Other examples of suitable linear diamines include the Jeffamine^{™} range such as the polyoxypropylene diamines available as Jeffamine^{™} D230, Jeffamine^{™} D400 and Jeffamine^{™} D2000 as well as Jeffamine^{™} EDR-148, a triethylene glycol diamine. Examples of alkyl substitued branched diamines include 2 methyl 1,5 pentane diamine, 2,2,4 trimethyl-1,6 hexane diamine and 2,4,4 trimethyl-1,6 hexane diamine. Cyclic diamines may also be used, such as isophorone diamine, cyclohexane diamine, piperazine and 4,4'-methylene bis(cyclohexyl amine).

Alkanolamines are compounds containing amine moieties and hydroxyl moieties. Suitable examples of alkanolamines include ethanolamine, propanolamine and 2-(methyl amino) ethanol. Most preferred are ethanolamine and propanolamine.

Primary amines are preferred and most preferred are ethylene diamine, 1,4 butane diamine and 1,6 hexane diamine. It is thought that these produce primary urethanes with a hydrogen atom on the nitrogen which results in increased hydrogen bonding between the polymer chains. It is thought that the consequence of this is that improved coating properties result.

Preferred suitable cyclic carbonates used to react with the diamines or alkanolamines include glycerol carbonate, ethylene carbonate, propylene carbonate and butylene carbonate and mixtures thereof.

When a diamine reacts with ethylene carbonate, the hydroxyl moieties on the urethane diol are of the primary type. The reaction product of ethylene carbonate with a diamine of general formula R(NH₂)₂, where R represents an alkyl chain, is HO(CH₂)ₙOOCNHRNHCOO(CH₂)ₙOH where n is 2. This contains two urethane linkages. Where the diamine reacts with a cyclic carbonate of more than two carbons in the longest straight chain, for example propylene carbonate or butylene carbonate, that is where n is 3 and 4 respectively, a mixture of both primary and secondary hydroxyl moieties result. In such a case some of the urethane diol molecules will have primary hydroxyls at each end, others will comprise secondary hydroxyls only and yet others will contain one of each hydroxyl type.

When an alkanolamine of general formula NH₂ROH reacts with the cyclic carbonate only one urethane linkage results. Where the cyclic carbonate is ethylene carbonate a urethane diol of general formula HO(CH₂)ₙOOCNHROH where n is 2 is formed. In this case the urethane diol may have a secondary hydroxyl group if the hydroxyl on the alkanol from which it was made is a secondary type. Where n is greater than 2 the same rules that applied to the diamines apply.

The urethane diol used in the preparation of the polyurethane polymer is preferably the reaction product of a diamine or an alkanolamine with a cyclic carbonate.

Polyisocyanates are compounds having two or more isocyanate groups per molecule. Suitable isocyanates are aliphatic or aromatic diisocyanates. Examples of suitable aliphatic diisocyanates include hexamethylene diisocyanate, isophorone diisocyanate, cyclohexane-1,4 diisocyanate, 4,4'-dicyclohexylmethane diisocyanate, trimethyl-1,6 diisocyanatohexane and m-tetramethylxylene diisocyanate. Examples of suitable aromatic diisocyanates include toluene diisocyanate (also known as TDI) normally a mixture of 2,4 toluene diisocyanate and 2,6 toluene diisocyanate, p-xylylene diisocyanate, 1,4 phenylene diisocyanate, 1,5 naphthylene diisocyanate, diphenylmethane diisocyanate (also known as MDI) normally a mixture of 4,4'-diphenylmethane diisocyanate and 2,4-diphenyhnethane diisocyanate, and polymeric MDI. Other suitable polyisocyanates include the isocyanurate trimers, allophanates and uretdiones of diisocyanates such as those described above. Preferred polyisocyanates include 1,6 hexane diisocyanate, isophorone diisocyanate, 4,4'dicyclohexyl methane diisocyanate, TDI and MDI and mixtures thereof.

Examples of suitable compounds containing at least two moieties reactive with the isocyanate moieties on the polyisocyanate include dihydroxyl functional compounds such as ethylene glycol and hydroxyl terminated butadiene. Compounds of molecular weight at least 300 Daltons are preferred. Hydroxyl functional compounds containing more than two hydroxyl moieties can be used but care must be taken to avoid crosslinking and hence gelation. More preferred are polymers of molecular weight at least 300 Daltons and containing at least two hydroxyl moieties, or polyols. Suitable examples of such polyols include polyester polyols, polyether polyols and polycarbonate polyols and mixtures thereof. Polyether polyols and polyester polyols are preferred. The polyester polyols are conveniently prepared by normal polyesterification processes from diacids such as adipic acid, isophthalic acid and the like, and diols such as ethylene glycol, diethylene glycol, neopentyl glycol and the like. The number of hydroxyl moieties per polyester chain can be controlled by the level of molar excess of the diol over the diacid. Linear polyester polyols are preferred but some branching can be introduced into the polyester polyol by using a small amount of a triol, such as trimethylol propane. The molecular weight of the polyester can be from 300 to 10,000 Daltons preferably from 500 to 4000 Daltons. Suitable examples of such polyester polyols include Bester^{™} 101 and Bester^{™}120 (available from Rohm and Haas Italia, Parona, Lomellina, Italy). Linear aliphatic polycarbonate polyester polyols such as Desmophen® C200 (available from Bayer PLC, Newbury, Berks, UK) are also useful. Suitable examples of the polyether polyols include polypropylene glycol and polytetramethylene ether glycol. Preferred examples of the polytetramethylene ether glycol type include Terathane^{™} 1000 and Terathane^{™} 2000 (available from DuPont, Delaware, USA), in each case the number denoting the approximate molecular weight of the polyol. Diamine compounds and dithiol compounds are also useful but less preferred.

The compound containing at least one dispersing moiety and at least one moiety reactive with the isocyanate of the polyisocyanate facilitates dispersion of the particles. Preferably, the isocyanate reactive moiety is different to the dispersing moiety. The isocyanate reactive moiety serves to chemically attach the compound to the urethane polymer thereby providing good self-emulsifying properties in the absence of external surfactants, although these may be used if desired. Such external surfactants are not chemically reacted with the urethane polymer unlike the compound. The compound preferably carries two isocyanate reactive moieties. Even more preferably the moieties are amino or hydroxyl. Most preferred is hydroxyl.

The compound may carry an ionisable or non-ionisable dispersing moiety. Preferably the moiety is ionisable. Where it is ionisable, it is preferred that the compound carrying the dispersing moiety is of molecular weight less than 300 Daltons. The polyurethane polymer preferably contains from 2 to 15% by weight of such a compound and more preferably from 5 to 10% by weight. The ionisable moiety may be acidic or basic. Preferably it is acidic as most materials and additives used in aqueous coatings are also acidic and this promotes compatibility. Even more preferably, the ionisable moiety is a carboxyl group. Such compounds include the dihydroxy alkanoic acids such as dimethylol propionic acid and dimethylol butanoic acid. Most preferably dimethylol propionic acid is used.

Where the dispersing moiety is non-ionic the molecular weight of the compound carrying it is preferably from 500 to 6000 Daltons, more preferably from 750 to 3000 Daltons. Suitable examples of compounds carrying non-ionisable dispersing moieties include methoxy polyethylene glycol, polyethylene glycol, ethylene oxide-propylene oxide copolymers such as the Synperonics^{™} (available from Uniqema, Netherlands), polyether diols, poly(oxyethylene-oxypropylene) diamines such as Jeffamine^{™} ED 2003. The polyurethane polymer preferably contains from 5 to 30% by weight, more preferably from 7 to 20% by weight of the compound. Preferably the dispersing moiety is hydroxyl. Diols containing pendant methoxy terminated polyoxyethylene are also useful. These can be made by known methods, for example as disclosed in US 5,314,942 published in 1994 which is herein incorporated by reference.

Where the dispersing moiety is ionisable, in order to be effective at dispersing the polymer particles in water it must be at least partially neutralised with an appropriate neutralising agent. Where the moiety is an acid, a base is preferably used to neutralise it. Examples of suitable neutralising bases are alkali metal hydroxides and amines. Amines are most preferred as they have a minimum adverse affect on the properties of the dried coating. Suitable amines include ammonia and primary, secondary and tertiary amines such as triethylamine and dimethyl ethanolamine. Preferably, tertiary amines are used as these reduce the risk of gelation during the chain extension stage. Where the ionisable moiety is a base an acid is preferably used. Examples of suitable acids include the organic acids such as formic acid, acetic acid and lactic acid. Lactic acid is preferred as it does not have an unpleasant odour.

A combination of compounds each carrying ionic or non-ionic moieties may also be used to facilitate the dispersion of the particles.

Preferably, the isocyanate moieties of the polyisocyanate are in molar excess relative to the polyisocyanate reactive moieties of b), c) and e). This produces isocyanate functional compound, often referred to as a urethane prepolymer, and which is subsequently chain extended by reacting with the chain extender compound to increase the molecular weight. This generally improves the properties of the dried coating. More preferably the excess of isocyanate moieties is from 10 to 200%. Most preferably the polyisocyanate excess is from 25-150%.

The chain extender compound must be capable of reacting with the excess isocyanate of the urethane prepolymer. Suitable examples include water and compounds with two moieties reactive with the excess isocyanate on the urethane prepolymer. Preferred chain extender compounds include the diamines previously described as suitable for reacting with the cyclic carbonates. Most preferred are the water soluble diamines such as ethylene diamine.

Suitable examples of ethylenically unsaturated addition copolymerisable monomers preferably comprise acrylic monomers. Using the nomenclature of (meth)acrylate to represent both acrylate and methacrylate, preferred monomers include alkyl esters of acrylic and methacrylic acid such as methyl (meth)acrylate, ethyl (meth)acrylate, butyl (meth)acrylate, propyl (meth)acrylate, 2-ethyl hexyl (meth)acrylate and alkoxy poly(oxyethylene) (meth)acrylate. Acid functional monomers such as acrylic acid and methacrylic can also be included, although not preferred. Hydroxy functional monomers such as hydroxy ethyl (meth)acrylate and hydroxy isopropyl (meth)acrylate can also be included. Other suitable ethylenically unsaturated monomers include the vinyl monomers such as vinyl versatate, vinyl acetate, styrene, alpha methyl styrene and other styrene derivatives.

The coating composition can optionally contain other additives useful in aqueous coating compositions. Suitable examples of such additives include rheological modifiers, waxes, crosslinkers, dispersants, flow aids, anti-foams, tackifiers, plasticisers and biocides.

The coating composition may also contain pigments and extenders. Suitable examples of pigments include scattering pigments such as titanium dioxide, organic pigments, flake pigments such as aluminium and pearlescent; and transparent pigments such as transparent iron oxide or a mixture of these optionally with other pigments.

Preferably, the coating composition is a paint coating.

The coating compositions can be prepared by standard methods, for example by mixing or high speed stirring with pigments and other ingredients that are standard for coating compositions.

The coating compositions can be applied by standard techniques for example by brushing, roller, pad, spraying and blade.

This invention also provides an aqueous dispersion containing polyurethane-acrylic hybrid particles dispersed in aqueous medium containing
i) polyurethane polymer, preferably from 0.1 to 75 wt%
ii) copolymer of ethylenically unsaturated addition copolymerisable monomers, preferably from 25 to 99.9 wt%
characterised in that the polyurethane polymer comprises the reaction product of
a) a polyisocyanate
b) a compound containing at least two moieties reactive with the isocyanate moieties of the polyisocyanate
c) a compound containing at least one dispersing moiety and at least one moiety reactive with the isocyanate moieties of the polyisocyanate
d) a chain extender compound
e) and a urethane diol, being the reaction product of a cyclic carbonate and a compound containing an amino group and a further group selected from amino and hydroxy, said urethane diol comprising up to 80 wt% of the polyurethane polymer.

The aqueous dispersions containing polyurethane-acrylic hybrid particles are preferably produced by (a) forming in solvent an isocyanate functional urethane prepolymer which also contains dispersing moieties (b) diluting the urethane prepolymer in ethylenically unsaturated monomers and neutralising with base (c) emulsifying the solution of prepolymer in monomer to form an emulsion of droplets of diameter less than 1000nm dispersed in water (d) chain extending the isocyanate functional urethane prepolymer to produce higher molecular weight urethane polymer and (e) copolymerising the ethylenically unsaturated monomers by free radical polymerisation. Optionally, the neutralising base may be added to the aqueous phase prior to emulsification

The emulsification step requires good mixing and is conveniently carried out using high speed stirring or a mechanical homogeniser such as a Silverson. Optionally ultrasound sonic instruments manufactured by IKA, Ross, Microfluidics, Sonolator or Bronson Sonifier can be used. The precise conditions required to produce an emulsion will depend on the type of equipment used and can be determined by simple variation of the mixing conditions used.

The ethylenically unsaturated monomers can be polymerised using free radical polymerisation initiators. Suitable free radical polymerisation initiators include peroxides such as hydrogen peroxide, cumene hydroperoxide and tertiary butyl hydroperoxide; azo types such as 4,4'azobis(4-cyanapentanoic acid); persulphates such as potassium persulphate and ammonium persulphate and redox initiator combinations such as ascorbic acid and hydrogen peroxide. Optionally, metal salts such as copper, chromium and iron salts can be added when redox pairs are used.

This invention also provides a urethane prepolymer characterised in that it comprises the reaction product of
a) a polyisocyanate
b) a compound containing at least two moieties reactive with the isocyanate moieties of the polyisocyanate
c) a compound containing at least one dispersing moiety and at least one moiety reactive with the isocyanate moieties of the polyisocyanate
d) a urethane diol, being the reaction product of a cyclic carbonate and a compound containing an amino group and a further group selected from amino and hydroxy, said urethane diol comprising up to 80wt% of the urethane prepolymer.

Preferably the urethane prepolymer has sufficient isocyanate moieties to further react with for example a diamine to facilitate chain extension.

The invention is further illustrated by the following examples of which Examples A and B are comparative.

### EXAMPLE UD1

### Preparation of Urethane Diol from Propylene Carbonate and Ethylene Diamine

To a round bottomed flask fitted with an anchor stirrer, dropping funnel, nitrogen feed and condenser was charged 91.0g of ethylene diamine. A nitrogen blanket was established and the temperature raised to 50°C whilst stirring; 324.5g of propylene carbonate was added evenly over a period of 1 hour using a peristaltic pump. An exotherm resulted and the temperature was allowed to rise to between 60 and 70°C. The temperature was reduced to 50°C and the contents held at this temperature for a further hour before being cooled and the urethane diol collected as a hard white solid. Titration of the residual amine showed that 98.6% of it had reacted with the propylene carbonate.

### EXAMPLE UD2

### Preparation of Urethane Diol from Propylene Carbonate and 1,6 Hexane Diamine

The same procedure as above was used except that the ethylene diamine was replaced by 175.5g of 1,6 hexane diamine.

### EXAMPLE UD3

### Preparation of Urethane Diol from Ethylene Carbonate and 1,6 hexane Diamine

The same procedure as above was used except that 301.2 g of ethylene carbonate and 198.8g of 1,6 hexane diamine was used. The resultant urethane diol was a white solid. Titration of the residual amine showed that 97 % of it had reacted with the ethylene carbonate.

### EXAMPLE UD4

### Preparation of Urethane Diol from Ethylene Carbonate and 4,4' methylene bis(cyclohexyl amine).

The same procedure as above was used except that 210.1g of ethylene carbonate and 244.9 g of 1,6 hexane diamine was used. The resultant urethane diol was a white solid. Titration of the residual amine showed that 95 % of it had reacted with the ethylene carbonate.

### EXAMPLE UD5

### Preparation of Urethane Diol from Propylene Carbonate and Isophorone Diamine (S-amino-1,3,3 trimethylcyclohexanemethyl amine)

The same procedure as above was used except that 551.36g of propylene carbonate and 448.64 g of isophorone diamine was used. The resultant urethane diol was a clear solid. Titration of the residual amine showed that 92.2 % of it had reacted with the propylene carbonate.

### EXAMPLE 1

### Preparation of Aqueous Polyurethane-Acrylic hybrid Dispersion using UD 1.

To a round bottomed flask fitted with the same equipment as used in the urethane diol preparation was added 57.75g of N-methyl pyrollidone (NMP) as solvent, 57.04g of isophorone diisocyanate (IPDI) available as Desmodur^{™} I from Bayer PLC Newbury Berks, UK, 13.11g of dimethylol propionic acid (DMPA), 48.94g of Bester 120 and 15.67g of Example UD1 whilst stirring under a nitrogen blanket. Final addition was 0.01g of dibutyl tin dilaurate (DBTDL) as catalyst for the urethane reaction. The temperature of the contents was raised to 90°C A urethane prepolymer resulted. The temperature of the contents was held for 1 hour after which it was reduced to 75°C and 9.88g of triethylamine (TEA) were added. 41.90g of butyl acrylate and 83.69g of methyl methacrylate were added. The solution of urethane prepolymer in solvent and acrylic monomers was mixed for 30 minutes, cooled to 30°C and transferred to a 2 litre parallel sided glass reactor containing 485.08g of demineralised (Demin) water under a nitrogen blanket and fitted with a reflux condenser. During the transfer the water was under vigorous agitation using a turbine stirrer rotating at 250-300 rpm. A fine emulsion resulted and to this 2.57g of ethylene diamine (ED) as chain extender was added and the temperature adjusted to 35°C and held for 30 minutes. The stirrer speed was reduced to 150 rpm. To the emulsion was added 11.31g of a 10wt% aqueous solution of tertiary butyl hydroperoxide (TBHP) and 1.60g of a 1wt% aqueous solution of iron (III) EDTA followed by 10.59g of a 1wt% aqueous solution of ascorbic acid. The contents of the reactor were allowed to exotherm and the temperature increased to approximately 50°C as a consequence. This maximum temperature was maintained for 15 minutes before the temperature of the reactor contents were readjusted to 35°C. A further 41.90g of butyl acrylate and 83.69g of methyl methacrylate were added to the reactor whilst stirring and stirred for a further 10 minutes. An addition of 14.12g of the ascorbic acid solution described above was made following which the contents of the reactor increased. The maximum temperature was maintained for 15 minutes as before and then adjusted to 35°C. After this time three more additions each of 7.05g of the ascorbic acid solution were made to increase the conversion of the acrylic monomers. In each case the maximum temperature attained was maintained for 15 minutes before the next addition was made. After the final addition of ascorbic acid solution was made the contents of the reactor was held for 30 minutes at the peak temperature, before being cooled to room temperature of about 23°C and filtered though 80 micron nylon mesh:

This produced a dispersion of polyurethane-acrylic hybrid particles of polymer composition 35wt% polyurethane and 65 wt% acrylic. The polyurethane component comprised in parts by weight, isophorone diisocyanate (IPDI) 42.3, Bester 120 36.3, UD1 11.6, dimethylol propionic acid (DMPA) 9.7 and ethylene diamine (ED) 1.9; all parts by weight. The weight average mean diameter of the particles was 188nm and the non volatile content was 38.2 wt%. The pH was 7.06.

### EXAMPLE 2

### Preparation of Aqueous Polyurethane-Acrylic hybrid Dispersion using UD 1

The same procedure as used in Example 1 was repeated except that the weights of the ingredients (in grams) were as shown in Table 1.
This produced a dispersion of polyurethane-acrylic hybrid particles of the following polymer composition:
Polyurethane 20 wt% Acrylic 80 wt%
The polyurethane component comprised, by weight,

| | |
|---|---|
| IPDI | 42.3 |
| Bester 120 | 36.3 |
| UD1 | 11.6 |
| DMPA | 9.7 |
| ED | 1.9 |

The weight average mean diameter of the particles was 203nm and the non volatile content was 38.7 wt%. The pH was 7.7.

### COMPARATIVE EXAMPLES A AND B

### Preparation of Aqueous Polyurethane-Acrylic hybrid Dispersion not containing Urethane Diol

The same procedure as used in Example 1 was followed except that the weights of the ingredients were as shown in Table 1. This produced two dispersions of polyurethane-acrylic particles:

### Comparative Example A

### Polyurethane 20 wt% Acrylic 80 wt%

The polyurethane component comprised, by weight,

| | |
|---|---|
| IPDI | 46.3 |
| Bester 120 | 35.6 |
| DMPA | 16.2 |
| ED | 1.9 |

The weight average mean diameter of the particles was 243nm and the non volatile content was 37.4 wt%. The pH was 6.8.

### Comparative Example B

### Polyurethane 35 wt% Acrylic 65 wt%

The polyurethane component comprised, by weight,

| | |
|---|---|
| IPDI | 46.3 |
| Bester 120 | 35.6 |
| DMPA | 16.2 |
| ED | 1.9 |

The weight average mean diameter of the particles was 294nm and the non volatile content was 37.6 wt%. The pH was 7.0.

**TABLE 1**

| | **Example 1** | **Example 2** | **Comparative Example A** | **Comparative Example B** |
|---|---|---|---|---|
| **A** | | | | |
| Bester 120 | 48.94 | 27.67 | 27.69 | 47.63 |
| UD1 | 15.67 | 8.86 | | |
| UD2 | | | | |
| IPDI | 57.04 | 32.25 | 35.97 | 61.88 |
| DMPA | 13.11 | 7.41 | 12.61 | 21.70 |
| NMP | 57.75 | 31.06 | 23.32 | 40.12 |
| DBTDL | 0.01 | 0.01 | 0.01 | 0.01 |

| **B** | | | | |
|---|---|---|---|---|
| Butyl acrylate | 41.90 | 25.90 | 25.92 | 41.42 |
| Methyl methacrylate | 83.69 | 51.75 | 51.79 | 82.75 |
| TEA | 9.88 | 9.88 | 9.51 | 16.36 |
| Demin water | 485.08 | 509.40 | 517.10 | 503.59 |

| **C** | | | | |
|---|---|---|---|---|
| Ethylene diamine | 2.57 | 1.47 | 1.45 | 2.50 |
| Demin water | | | | |

| **D** | | | | |
|---|---|---|---|---|
| TBHP solution 10wt% aqueous solution | 11.31 | 13.98 | 13.99 | 11.18 |
| Ascorbic acid solution 1wt %(1) | 10.59 | 10.58 | 10.59 | 10.42 |
| Iron EDTA 1wt % aqueous solution | 1.60 | 1.60 | 1.60 | 1.60 |

| **E** | | | | |
|---|---|---|---|---|
| Butyl acrylate | 41.90 | 77.71 | 77.79 | 41.42 |
| Methyl methacrylate | 83.69 | 155.22 | 155.39 | 82.75 |

| **F** | | | | |
|---|---|---|---|---|
| Ascorbic acid 1wt% aqueous solution (2) | 14.12 | 14.11 | 14.12 | 13.88 |
| Ascorbic acid 1wt% aqueous solution (3) | 7.05 | 7.05 | 7.05 | 6.93 |
| Ascorbic acid 1wt% aqueous solution (4) | 7.05 | 7.05 | 7.05 | 6.93 |
| Ascorbic acid 1wr% aqueous solution (5) | 7.05 | 7.05 | 7.05 | 6.93 |
| TOTAL | 1000.00 | 1000.00 | 1000.00 | 1000.00 |

### EXAMPLES 3,4,5 AND 6

### Preparation of Aqueous Polyurethane-Acrylic hybrid Dispersion using varying amounts of UD 2.

The same procedure as used in Example 1 was followed except for the following differences. Tap water was used rather than demineralised, sodium ascorbate (1 wt% aqueous solution) was used rather than ascorbic acid and iron EDTA was not added. The weights of the ingredients were as shown in Table 2.

**Table 2**

| | **Example 3** | **Example 4** | **Example 5** | **Example 6** |
|---|---|---|---|---|
| **A** | | | | |
| Bester 120 | 36.33 | 29.47 | 21.64 | 12.05 |
| UD1 | | | | |
| UD2 | 2.91 | 7.86 | 12.12 | 17.35 |
| IPDI | 30.25 | 32.71 | 36.04 | 40.12 |
| DMPA | 8.52 | 7.90 | 7.98 | 8.07 |
| NMP | 31.20 | 31.22 | 31.22 | 31.21 |
| DBTDL | 0.01 | 0.01 | 0.01 | 0.01 |

| **B** | | | | |
|---|---|---|---|---|
| Butyl acrylate | 68.84 | 68.87 | 68.87 | 68.86 |
| Methyl methacrylate | 137.53 | 137.59 | 137.59 | 137.57 |
| TEA | 6.42 | 5.95 | 6.01 | 6.08 |
| Tap water | 514.90 | 515.14 | 515.11 | 515.10 |

| **C** | | | | |
|---|---|---|---|---|
| Ethylene diamine | 1.36 | 1.47 | 1.62 | 1.81 |
| Tap water | 10.30 | 10.30 | 10.30 | 10.30 |

| **D** | | | | |
|---|---|---|---|---|
| TBHP 10wt% aqueous solution | 7.98 | 7.98 | 7.98 | 7.98 |
| Sodium ascorbate 1wt% aqueous solution (1) | 15.47 | 15.47 | 15.47 | 15.47 |
| Iron EDTA 1wt% aqueous solution | | | | |

| **E** | | | | |
|---|---|---|---|---|
| Butyl acrylate | 37.07 | 37.09 | 37.09 | 37.08 |
| Methyl methacrylate | 74.05 | 74.09 | 74.08 | 74.08 |

| **F** | | | | |
|---|---|---|---|---|
| Sodium ascorbate 1wt% aqueous solution (2) | 8.35 | 8.36 | 8.36 | 8.35 |
| Sodium ascorbate 1wt% aqueous solution (3) | 8.51 | 8.52 | 8.51 | 8.51 |
| | | | | |
| TOTAL | 1000.00 | 1000.00 | 1000.00 | 1000.00 |
| | | | | |

The particles of Examples 3-6 all comprised 20 wt% polyurethane and 80 wt% acrylic polymer.

The polyurethane component of each example comprised, by weight,

### Example 3

| | |
|---|---|
| IPDI | 38.1 |
| Bester 120 | 45.8 |
| UD2 | 3.7 |
| DMPA | 10.7 |
| ED | 1.7 |

The weight average mean diameter of the particles was 154nm and the non volatile content was 39.7 wt%. The pH was 7.4.

### Example 4

| | |
|---|---|
| IPDI | 41.2 |
| Bester 120 | 37.1 |
| UD2 | 9.9 |
| DMPA | 9.9 |
| ED | 1.9 |

The weight average mean diameter of the particles was 162nm and the non volatile content was 39.6 wt%. The pH was 7.4.

### Example 5

| | |
|---|---|
| IPDI | 45.4 |
| Bester 120 | 27.2 |
| UD2 | 15.3 |
| DMPA | 10.1 |
| ED | 2.0 |

The weight average mean diameter of the particles was 164nm and the non volatile content was 37.5 wt%. The pH was 7.4.

### Example 6

| | |
|---|---|
| IPDI | 50.4 |
| Bester 120 | 15.2 |
| UD2 | 21.9 |
| DMPA | 10.2 |
| ED | 2.3 |

The weight average mean diameter of the particles was 105nm and the non volatile content was 39.7 wt%. The pH was 7.3.

### EXAMPLES 7,8,9 AND 10

### Preparation of Aqueous Polyurethane-Acrylic hybrid Dispersion using different amounts of UD 2.

The same procedure as used in Examples 3-6 was followed except that the acrylic monomers were not split into two portions, but rather all added to the urethane prepolymer first, mixed and then added to the water and emulsified. The weights of the ingredients are as shown in Table 3.

**Table 3**

| | **Example 7** | **Example 8** | **Example 9** | **Example 10** |
|---|---|---|---|---|
| **A** | | | | |
| Bester 120 | 61.84 | 50.17 | 36.85 | 20.51 |
| UD1 | | | | |
| UD2 | 4.95 | 13.38 | 20.64 | 29.54 |
| IPDI | 51.49 | 55.70 | 61.36 | 68.31 |
| DMPA | 14.50 | 13.45 | 13.58 | 13.74 |
| NMP | 53.08 | 53.13 | 53.12 | 53.11 |
| DBTDL | 0.01 | 0.01 | 0.01 | 0.01 |

| **B** | | | | |
|---|---|---|---|---|
| Butyl acrylate | 83.70 | 83.76 | 83.75 | 83.74 |
| Methyl methacrylate | 167.20 | 167.33 | 167.31 | 167.29 |
| TEA | 10.93 | 10.14 | 10.24 | 10.36 |
| Tap water | 500.77 | 501.19 | 501.14 | 501.08 |

| **C** | | | | |
|---|---|---|---|---|
| Ethylene diamine | 2.32 | 2.51 | 2.77 | 3.08 |
| Tap water | 10.02 | 10.02 | 10.02 | 10.02 |

| **D** | | | | |
|---|---|---|---|---|
| TBHP10wt% aqueous solution | 7.76 | 7.77 | 7.77 | 7.77 |
| Ascorbic acid 1wt% aqueous solution (1) | 23.15 | 23.16 | 23.16 | 23.16 |
| Iron EDTA solution | | | | |

| **E** | | | | |
|---|---|---|---|---|
| Butyl acrylate | | | | |
| Methyl methacrylate | | | | |

| **F** | | | | |
|---|---|---|---|---|
| Ascorbic acid 1wt% aqueous solution (2) | 8.28 | 8.28 | 8.28 | 8.28 |
| Ascorbic acid 1wt% aqueous solution (3) | | | | |
| | | | | |
| TOTAL | 1000.00 | 1000.00 | 1000.00 | 1000.00 |
| | | | | |

The particles of Examples 7-10 all comprised 35 wt% polyurethane and 65 wt% acrylic polymer.

The polyurethane component of each example comprised, by weight,

### Example7

| | |
|---|---|
| IPDI | 38.1 |
| Bester 120 | 45.8 |
| UD2 | 3.7 |
| DMPA | 10.7 |
| ED | 1.7 |

The weight average mean diameter of the particles was 171nm and the non volatile content was 38.2 wt%. The pH was 6.9.

### Example 8

| | |
|---|---|
| IPDI | 41.2 |
| Bester 120 | 37.1 |
| UD2 | 9.9 |
| DMPA | 9.9 |
| ED | 1.9 |

The weight average mean diameter of the particles was 218nm and the non volatile content was 37.8 wt%. The pH was 7.0.

### Example 9

| | |
|---|---|
| IPDI | 45.4 |
| Bester 120 | 27.2 |
| UD2 | 15.3 |
| DMPA | 10.1 |
| ED | 2.0 |

The weight average mean diameter of the particles was 250nm and the non volatile content was 39.8 wt%. The pH was 7.1.

### Example 10

| | |
|---|---|
| IPDI | 50.4 |
| Bester 120 | 15.2 |
| UD2 | 21.9 |
| DMPA | 10.2 |
| ED | 2.3 |

The weight average mean diameter of the particles was 140nm and the non volatile content was 38.7 wt%. The pH was 7.3.

### EXAMPLES 11,12,13 AND 14

### Preparation of Aqueous Polyurethane-Acrylic Hybrid Dispersion using Other Polyols and Urethane Diols, UD3 or UD4.

The same procedure as used in Examples 3-6 was followed. The weights of the ingredients were as shown in Table 4.

**Table 4**

| | **Example 11** | **Example 12** | **Example 13** | **Example 14** |
|---|---|---|---|---|
| **A** | | | | |
| Terathane 2000 | 48.47 | 48.51 | 91.26 | |
| Desmophen C200 | | | | 46.93 |
| UD3 | 15.52 | | 17.26 | 27.40 |
| UD4 | | 18.66 | | |
| IPDI | 56.50 | 54.12 | 68.87 | 54.69 |
| DMPA | 12.98 | 12.44 | 13.68 | 6.29 |
| NMP | 40.8 | 40.85 | 58.25 | 41.33 |
| DBTDL | 0.01 | 0.01 | 0.01 | 0.01 |

| **B** | | | | |
|---|---|---|---|---|
| Butyl acrylate | 42.13 | 42.18 | 38.97 | 42.68 |
| Methyl methacrylate | 84.16 | 84.25 | 155.20 | 85.25 |
| TEA | 9.79 | 9.37 | 10.31 | 4.74 |
| Tap water | 503.99 | 503.89 | 488.94 | 502.75 |

| **C** | | | | |
|---|---|---|---|---|
| Ethylene diamine | 2.54 | 2.44 | 3.10 | 2.46 |

| **D** | | | | |
|---|---|---|---|---|
| TBHP10wt% aqueous solution | 11.37 | 11.38 | 8.74 | 11.51 |
| Sodium Ascorbate 1wt% aqueous solution (1) | 10.49 | 10.50 | 24.46 | 10.63 |

| **E** | | | | |
|---|---|---|---|---|
| Butyl acrylate | 42.13 | 42.18 | | 42.68 |
| Methyl methacrylate | 84.16 | 84.25 | | 85.25 |

| **F** | | | | |
|---|---|---|---|---|
| Sodium Ascorbate 1wt% aqueous solution (2) | 13.98 | 14.00 | | 14.17 |
| Sodium Ascorbate | 6.99 | 6.99 | 6.98 | 7.08 |
| 1wt% aqueous solution (3) | | | | |
| Sodium Ascorbate 1wt% aqueous solution (4) | 6.99 | 6.99 | 6.98 | 7.08 |
| Sodium Ascorbate 1wt% aqueous solution (5) | 6.99 | 6.99 | 6.98 | 7.08 |
| TOTAL | 1000.00 | 1000.00 | 1000.00 | 1000.00 |
| | | | | |

The particles of Examples 11,12 and 14 comprised 35 wt% polyurethane and 65 wt% acrylic polymer. Example 13 contains 50 wt% polyurethane and 50 wt% acrylic polymer.

The polyurethane component of each example comprised, by weight,

### Example 11

| | |
|---|---|
| IPDI | 41.5 |
| Terathane 2000 | 35.6 |
| UD3 | 11.4 |
| DMPA | 9.6 |
| ED | 1.9 |

The weight average mean diameter of the particles was 166 nm and the non volatile content was 38.7 wt%. The pH was 7.2.

### Example 12

| | |
|---|---|
| IPDI | 39.7 |
| Terathane 2000 | 35.6 |
| UD4 | 13.7 |
| DMPA | 9.1 |
| ED | 1.8 |

The weight average mean diameter of the particles was 58 nm and the non volatile content was 38.8 wt%. The pH was 7.3.

### Example 13

| | |
|---|---|
| IPDI | 35.5 |
| Terathane 2000 | 47.0 |
| UD3 | 8.9 |
| DMPA | 7.0 |
| ED | 1.6 |

The weight average mean diameter of the particles was 128 nm and the non volatile content was 38.6 wt%. The pH was 7.6.

### Example 14

| | |
|---|---|
| IPDI | 39.7 |
| Desmophen C200 | 34.1 |
| UD2 | 19.9 |
| DMPA | 4.6 |
| ED | 1.8 |

The weight average mean diameter of the particles was 108 nm and the non volatile content was 39.1 wt%. The pH was 7.6.

### EXAMPLES 15 and 16

### Preparation of Aqueous Polyurethane-Acrylic Hybrid Dispersion using Aromatic Diisocyanate and Urethane Diols

### Example 15

### Preparation of Aqueous Polyurethane-Acrylic hybrid Dispersion using UD 2.

A slightly different procedure was used to that of the earlier examples to enable the use of the faster reacting aromatic isocyanate. To a round bottomed flask fitted with the same equipment as used in the examples 3 to 6 was added 90.67g of Bester 120, available from Rohm and Haas Italia, Parona Lomellina Italy, and 24.66g of Example UD2 and 54.27 g of TDI (Scuranate T-80 from Lyondell, 13275 Fos sur Mer, France) whilst stirring under a nitrogen blanket. The temperature of the contents was raised to 60°C The temperature of the contents was held for 30 minutes after which a solution of 20.05 g of dimethylol propionic acid in 71.76 g of N-methyl pyrollidone was added. The temperature was held for a further hour at 60°C. A urethane pre-polymer resulted. The batch temperature was reduced to 50°C. 36.69g of butyl acrylate and 146.14g of methyl methacrylate were added over 15 minutes with stirring allowing the temperature to drop to 34°C and 15.11g of triethylamine (TEA) was then added. The solution of pre-polymer in solvent and monomers was then immediately transferred to a 2 litre parallel sided glass reactor containing 498.34g of demineralised (Demin) water under a nitrogen blanket and fitted with a reflux condenser. During the transfer the water was under vigorous agitation using a turbine stirrer rotating at 250-300 rpm. A fine emulsion resulted and to this a solution of 4.08g of ethylene diamine (ED) in 9.77 g of water as chain extender was added and the temperature adjusted to 35°C and held for 15 minutes. The stirrer speed was reduced to 150 rpm. To the emulsion was added 7.57g of a 10wt% aqueous solution of tertiary butyl hydroperoxide (TBHP) and 22.58g of a 1wt% aqueous solution of sodium ascorbate. The contents of the reactor were allowed to exotherm and the temperature increased to approximately 60°C as a consequence. The temperature of the reactor contents were readjusted to 35°C. An further addition of 8.08g of the sodium ascorbate solution described above was made. The dispersion was then cooled to room temperature of about 23°C and filtered though 80 micron nylon mesh.

This produced a dispersion of polyurethane-acrylic hybrid particles of polymer composition 50wt% polyurethane and 50 wt% acrylic.

### Example 16

### Preparation of Aqueous Polyurethane-Acrylic hybrid Dispersion using UD 5.

The same procedure as used in example 15 was repeated using the weights of ingredients (in grams) as shown in table 5.

**Table 5**

| | **Example 15** | **Example 16** |
|---|---|---|
| **A** | | |
| Bester 120 | 90.67 | 90.67 |
| | | |
| UD2 | 24.66 | |
| UD5 | | 24.66 |
| TDI | 54.27 | 54.27 |
| | | |
| **B** | | |
| DMPA | 20.05 | 20.05 |
| NMP | 71.76 | 71.76 |
| | | |

| **C** | | |
|---|---|---|
| Butyl acrylate | 36.69 | 36.69 |
| Methyl methacrylate | 146.14 | 146.14 |
| TEA | 15.11 | 15.11 |
| Tap water | 498.33 | 498.33 |

| **D** | | |
|---|---|---|
| Ethylene diamine | 4.08 | 4.08 |

| **E** | | |
|---|---|---|
| TBHP 10wt% aqueous solution | 7.57 | 7.57 |
| Sodium Ascorbate 1wt% aqueous solution (1) | 22.58 | 22.58 |

| **F** | | |
|---|---|---|
| Sodium Ascorbate | 8.08 | 8.08 |
| 1wt% aqueous solution (2) | | |
| | | |
| TOTAL | 1000 | 1000 |
| | | |

The particles of Examples 15 and 16 comprised 50 wt% polyurethane and 50 wt% acrylic polymer. The polyurethane component of each comprised, by weight

### Example 15

| | |
|---|---|
| TDI | 28.0 |
| Bester 120 | 46.8 |
| UD2 | 12.7 |
| DMPA | 10.4 |
| ED | 2.1 |

The weight average mean diameter of the particles was 80 nm and the non volatile content was 37.8 wt%. The pH was 8.5.

### Example 16

| | |
|---|---|
| TDI | 28.0 |
| Bester 120 | 46.8 |
| UD5 | 12.7 |
| DMPA | 10.4 |
| ED | 2.1 |

The weight average mean diameter of the particles was 158 nm and the non volatile content was 35.4 wt%. The pH was 8.78.

### Testing of Coatings

### Wine and coffee stain resistance

The dispersions of Examples 1-10 and Comparative Examples A and B were converted to coatings and evaluated as dry, unpigmented films for hardness and their resistance to wine and coffee stains as described below.

### The results are shown in Table 6

### Procedure for preparing dry, unpigmented films for evaluation.

The level of N methyl pyrollidone for all the polyurethane-acrylic hybrid dispersions was adjusted up to 10 wt%.

### Procedure for assessing unpigmented films for resistance to coffee stains.

Three successive coats of the solvent adjusted dispersions drawn down on hardboard using a 200 micron Doctor blade with a minimum of 8 hours between coats. The films were left to dry for 7 days under ambient conditions. 2 mls of instant black coffee solution was placed on a 1 week old film dried at room temperature and a plastic cup full of 80 mls of boiling water placed on top. This was left for 24 hours before being removed and the coffee washed off. The film is then assessed for staining and blushing according to the following rating scheme.

| | |
|---|---|
| Rating 1 | Very heavily and permanently marked/stained |
| Rating 2 | Heavily stained |
| Rating 3 | Moderately stained |
| Rating 4 | Lightly stained |
| Rating 5 | Unmarked |

### Wine Stain Test

The sample of dried coating was prepared as for the coffee stain test above. 1 ml of red wine was placed on a film, covered with a watchglass and left for 24 hours before being removed and the wine washed off. The film is then assessed for staining according to the following rating system.

| | |
|---|---|
| Rating 1 | Very heavily and permanently marked/stained |
| Rating 2 | Heavily stained |
| Rating 3 | Moderately stained |
| Rating 4 | Lightly stained |
| Rating 5 | Unmarked |

### Procedure for assessing hardness of the dry films.

One coat of each of the solvent adjusted dispersions was drawn down on glass using a 200 micron Doctor blade. The films were left to dry for 7 days at ambient temperature, of about 23°C and separately at 40°C. Hardness was measured according to DIN 53157, using an Erichsen Model 299/300 pendulum hardness tester from Erichsen GMBH and Co. KG, D-5870 Hemer-Sundwig, Germany

**Table 6**

| Example | Hardness after ageing at ambient temp. (sees) | Hardness after ageing at 40°C (sees) | Hot coffee | Red Wine |
|---|---|---|---|---|
| 1 | 131 | 138 | 3 | 3 |
| 2 | 143 | 167 | 3 | 2 |
| 3 | 120 | 143 | 4.5 | 5 |
| 4 | 125 | 143 | 4 | 5 |
| 5 | 136 | 158 | 3 | 5 |
| 6 | 118 | 140 | 1 | 3 |
| 7 | 123 | 115 | 3 | 3 |
| 8 | 146 | 147 | 3.5 | 4 |
| 9 | 149 | 149 | 4 | 4 |
| 10 | 99 | 156 | 3 | 3 |
| 11 | 106 | 136 | 5 | 5 |
| 12 | 131 | 124 | 5 | 5 |
| 13 | 83 | 83 | 3 | 3 |
| 14 | - | - | - | - |
| 15 | - | - | - | - |
| 16 | - | - | - | - |
| Comparative Example A | 142 | 140 | 2 | 2 |
| Comparative Example B | 155 | 149 | 1 | 2 |

The dried coats derived from dispersions prepared using urethane diols have in most cases superior stain resistance over the Comparative Examples A and B.

## Claims

1. An aqueous coating composition containing polymeric binder comprising particles of polyurethane-acrylic hybrid polymer dispersed in aqueous medium containing
i) polyurethane polymer
ii) copolymer of ethylenically unsaturated addition copolymerisable monomers
**characterised in that** the polyurethane polymer comprises the reaction product of
a) a polyisocyanate
b) a compound containing at least two moieties reactive with the isocyanate moieties of the polyisocyanate
c) a compound containing at least one dispersing moiety and at least one moiety reactive with the isocyanate moieties of the polyisocyanate
d) a chain extender compound
e) a urethane diol, being the reaction product of a cyclic carbonate and a compound containing an amino group and a further group selected from amino and hydroxy, said urethane diol comprising up to 80 wt% of the polyurethane polymer.

2. A coating composition according to claim 1 **characterised in that** the dispersing moiety is non-ionisable.

3. A coating composition according to claim 1 **characterised in that** the dispersing moiety is ionisable.

4. A coating composition according to any one of the preceding claims **characterised in that** the polyurethane-acrylic hybrid polymer comprises from 0.1 to 75 wt% of polyurethane polymer and from 25 to 99.9 wt% of copolymer of ethylenically unsaturated copolymerisable monomers.

5. A coating composition according to any one of the preceding claims **characterised in that** the coating composition is a paint coating.

6. A coating composition according to any one of the preceding claims **characterised in that** the compound containing an amino group and a further group is selected from the group of compounds comprising diamines, alkanolamines and amine terminated polyamides.

7. A coating composition according to any one of claims 1 to 5 **characterised in that** the compound containing an amino group and a further group is selected from the group of compounds comprising ethylene diamine, 1,4 butane diamine, 1,6 hexane diamine, ethanolamine and propanolamine.

8. A coating composition according to any one of the preceding claims **characterised in that** the cyclic carbonate is selected from the group comprising glycerol carbonate, ethylene carbonate, propylene carbonate and butylene carbonate.

9. A coating composition according to any one of the preceding claims **characterised in that** the polyisocyanate is selected from the group comprising 1,6 hexane diisocyanate, isophorone diisocyanate, 4,4'dicyclohexyl methane diisocyanate, toluene diisocyanate and methylene bis(phenyl isocyanate).

10. A coating composition according to any one of the preceding claims **characterised in that** the compound with at least two moieties reactive with the isocyanate moieties of the polyisocyanate is a polyol.

11. A coating composition according to claim 10 **characterised in that** the polyol is a polyester polyol or polyether polyol of molecular weight from 300 to 10,000 Daltons.

12. A coating composition according to any one of the preceding claims **characterised in that** the compound containing at least one dispersing moiety and at least one other moiety reactive with the isocyanate moieties of the polyisocyanate is a dihydroxy alkanoic acid.

13. A coating composition according to any one of the preceding claims **characterised in that** the ethylenically unsaturated addition copolymerisable monomers comprise the alkyl esters of acrylic and methacrylic acid.

14. A coating composition according to any one of the preceding claims **characterised in that** it also contains ingredients selected from the group consisting of rheological modifiers, waxes, crosslinkers, dispersants, flow aids, anti-foams, tackifiers, plasticisers, biocides, pigments and fillers.

15. An aqueous dispersion containing polyurethane-acrylic hybrid particles dispersed in aqueous medium containing
i) polyurethane polymer
ii) copolymer of ethylenically unsaturated addition copolymerisable monomers
**characterised in that** the polyurethane polymer comprises the reaction product of
a) a polyisocyanate
b) a compound containing at least two moieties reactive with the isocyanate moieties of the polyisocyanate
c) a compound containing at least one dispersing moiety and at least one moiety reactive with the isocyanate moieties of the polyisocyanate
d) a chain extender compound
e) a urethane diol, being the reaction product of a cyclic carbonate and a compound containing an amino group and a further group selected from amino and hydroxy, said urethane diol comprising up to 80 wt% of the polyurethane polymer.

16. A process of preparing the dispersion of claim 15 comprising
(a) forming in solvent an isocyanate functional urethane prepolymer which also contains dispersing moieties
(b) diluting the urethane prepolymer in ethylenically unsaturated monomers and neutralising with base
(c) emulsifying the solution of prepolymer in monomer to form an emulsion of droplets of diameter less than 1000nm dispersed in water
(d) chain extending the isocyanate functional urethane prepolymer to produce higher molecular weight urethane polymer and
(e) copolymerising the ethylenically unsaturated monomers by free radical polymerisation.

17. A urethane prepolymer **characterised in that** it comprises the reaction product of
a) a polyisocyanate
b) a compound containing at least two moieties reactive with the isocyanate moieties of the polyisocyanate
c) a compound containing at least one acid moiety and at least one moiety reactive with the isocyanate moieties of the polyisocyanate
d) a urethane diol, being the reaction product of a cyclic carbonate and a compound containing an amino group and a further group selected from amino and hydroxy, said urethane diol comprising up to 80wt% of the urethane prepolymer.

## Patentansprüche

1. Wässrige Beschichtungszusammensetzung, die ein polymeres Bindemittel enthält, das in einem wässrigen Medium dispergierte Teilchen eines Polyurethan-Acryl-Hybridpolymers aufweist, das enthält
i) Polyurethanpolymer
ii) Copolymer von ethylenisch ungesättigten additionscopolymerisierbaren Monomeren
**dadurch gekennzeichnet**, das das Polyurethanpolymer das Reaktionsprodukt umfasst von
a) einem Polyisocyanat
b) einer Verbindung, die wenigstens zwei Einheiten enthält, die mit den Isocyanateinheiten des Polyisocyanats reaktiv sind,
c) einer Verbindung, die wenigstens eine dispergierende Einheit und wenigstens eine Einheit enthält, die mit den Isocyanateinheiten des Polyisocyanats reaktiv ist,
d) einer Kettenverlängerungsverbindung,
e) einem Urethandiol, das das Reaktionsprodukt eines cyclischen Carbonats mit einer Verbindung ist, die eine Aminogruppe enthält sowie eine weitere Gruppe, die ausgewählt ist aus Amino und Hydroxy, wobei das genannte Urethandiol bis zu 80 Gew.-% des Polyurethanpolymers ausmacht.

2. Beschichtungszusammensetzung nach Anspruch 1, **dadurch gekennzeichnet, dass** die dispergierende Einheit nicht ionisierbar ist.

3. Beschichtungszusammensetzung nach Anspruch 1, **dadurch gekennzeichnet, dass** die dispergierende Einheit ionisierbar ist.

4. Beschichtungszusammensetzung nach irgendeinem der vorausgehenden Ansprüche, **dadurch gekennzeichnet, dass** das Polyurethan-Acryl-Hybridpolymer von 0,1 bis 75 Gew.-% Polyurethanpolymer und von 25 bis 99,9 Gew.-% Copolymer von ethylenisch ungesättigten copolymerisierbaren Monomeren aufweist.

5. Beschichtungszusammensetzung nach irgendeinem der vorausgehenden Ansprüche, **dadurch gekennzeichnet, dass** die Beschichtungszusammensetzung eine Anstrich-Beschichtung ist.

6. Beschichtungszusammensetzung nach irgendeinem der vorausgehenden Ansprüche, **dadurch gekennzeichnet, dass** die Verbindung, die eine Aminogruppe und eine weitere Gruppe enthält, aus der Gruppe von Verbindungen ausgewählt ist, die Diamine, Alkanolamine und aminoterminierte Polyamide umfasst.

7. Beschichtungszusammensetzung nach irgendeinem der Ansprüche 1 bis 5, **dadurch gekennzeichnet, dass** die Verbindung, die eine Aminogruppe und eine weitere Gruppe enthält, aus der Gruppe von Verbindungen ausgewählt ist, die Ethylendiamin, 1,4-Butandiamin, 1,6-Hexandiamin, Ethanolamin und Propanolamin umfasst.

8. Beschichtungszusammensetzung nach irgendeinem der vorausgehenden Ansprüche, **dadurch gekennzeichnet, dass** das cyclische Carbonat aus der Gruppe ausgewählt ist, die Glycerincarbonat, Ethylencarbonat, Propylencarbonat und Butylencarbonat umfasst.

9. Beschichtungszusammensetzung nach irgendeinem der vorausgehenden Ansprüche, **dadurch gekennzeichnet, dass** das Polyisocyanat aus der Gruppe ausgewählt ist, die 1,6-Hexandiisocyanat, Isophorondiisocyanat, 4,4'-Dicyclohexylmethandiisocyanat, Toluoldiisocyanat und Methylen-bis(phenylisocyanat) umfasst.

10. Beschichtungszusammensetzung nach irgendeinem der vorausgehenden Ansprüche, **dadurch gekennzeichnet, dass** die Verbindung mit wenigstens zwei Einheiten, die mit den Isocyanateinheiten des Polyisocyanats reaktiv sind, ein Polyol ist.

11. Beschichtungszusammensetzung nach Anspruch 10, **dadurch gekennzeichnet, dass** das Polyol ein Polyesterpolyol oder ein Polyetherpolyol mit einem Molekulargewicht von 300 bis 10.000 Dalton ist.

12. Beschichtungszusammensetzung nach irgendeinem der vorausgehenden Ansprüche, **dadurch gekennzeichnet, dass** die Verbindung, die wenigstens eine dispergierende Einheit und wenigstens eine andere Einheit enthält, die mit den Isocyanateinheiten des Polyisocyanats reaktiv ist, eine Dihydroxyalkansäure ist.

13. Beschichtungszusammensetzung nach irgendeinem der vorausgehenden Ansprüche, **dadurch gekennzeichnet, dass** die ethylenisch ungesättigten additionscopolymerisierbaren Monomeren die Alkylester von Acryl- und Methacrylsäure umfassen.

14. Beschichtungszusammensetzung nach irgendeinem der vorausgehenden Ansprüche, **dadurch gekennzeichnet, dass** sie auch Bestandteile enthält, die aus der Gruppe ausgewählt sind, die besteht aus Rheologiemodifikatoren, Wachsen, Vernetzern, Dispergiermitteln, Verlaufsmitteln, Antischaummitteln, Klebrigmachern, Weichmachern, Bioziden, Pigmenten und Füllstoffen.

15. Wässrige Dispersion, die in einem wässrigen Medium dispergierte Polyurethan-Acryl-Hybridteilchen enthält, die enthalten
i) Polyurethanpolymer
ii) Copolymer aus ethylenisch ungesättigten additionscopolymerisierbaren Monomeren,
**dadurch gekennzeichnet, dass** das Polyurethanpolymer das Reaktionsprodukt umfasst von
a) einem Polyisocyanat
b) einer Verbindung, die wenigstens zwei Einheiten enthält, die mit den Isocyanateinheiten des Polyisocyanats reaktiv sind,
c) einer Verbindung, die wenigstens eine dispergierende Einheit und wenigstens eine Einheit enthält, die mit den Isocyanateinheiten des Polyisocyanats reaktiv ist,
d) einer Kettenverlängerungs-Verbindung
e) einem Urethandiol, das das Reaktionsprodukt eines cyclischen Carbonats mit einer Verbindung ist, die eine Aminogruppe sowie eine weitere Gruppe enthält, die ausgewählt ist aus Amino und Hydroxy, wobei das Urethandiol bis zu 80 Gew.-% des Polyurethanpolymers ausmacht.

16. Verfahren zur Herstellung der Dispersion nach Anspruch 15, das umfasst
a) Bilden eines isocyanatfunktionellen Urethanpräpolymers, das auch dispergierende Einheiten enthält, in einem Lösemittel,
b) Verdünnen des Urethanpräpolymers in ethylenisch ungesättigten Monomeren und Neutralisation mit Base,
c) Emulgieren der Lösung aus Präpolymer in Monomer unter Bildung einer Emulsion von Tröpfchen mit einem Durchmesser von weniger als 1000 nm, die in Wasser dispergiert sind
d) Kettenverlängern des isocynatfunktionellen Urethanpräpolymers zur Herstellung eines höhermolekulargewichtigen Urethanpolymers und
e) Copolymerisieren der ethylenisch ungesättigten Monomeren durch Polymerisation mit freien Radikalen.

17. Urethanpräpolymer, **dadurch gekennzeichnet, dass** es das Reaktionsprodukt umfasst von
a) einem Polyisocyanat
b) einer Verbindung, die wenigstens zwei Einheiten enthält, die mit den Isocyanateinheiten des Polyisocyanats reaktiv sind,
c) einer Verbindung, die wenigstens eine saure Einheit und wenigstens eine Einheit enthält, die mit den Isocyanateinheiten des Polyisocyanats reaktiv ist,
d) einem Urethandiol, das das Reaktionsprodukt eines cyclischen Carbonats und einer Verbindung ist, die eine Aminogruppe und eine weitere Gruppe enthält, die ausgewählt ist aus Amino und Hydroxy, wobei das Urethandiol bis zu 80 Gew.-% des Urethanpräpolymers ausmacht.

## Revendications

1. Composition aqueuse de revêtement contenant un liant polymère comprenant des particules d'un polymère hybride polyuréthanne-polymère acrylique dispersées dans un milieu aqueux, contenant
i) un polymère du type polyuréthanne
ii) un copolymère de monomères à insaturation éthylénique copolymérisables par addition
**caractérisée en ce que** le polymère du type polyuréthanne comprend le produit de réaction
a) d'un polyisocyanate,
b) d'un composé contenant au moins deux groupements réactifs avec les groupements isocyanate du polyisocyanate,
c) d'un composé contenant au moins un groupement dispersant et au moins un groupement réactif avec les groupements isocyanate du polyisocyanate,
d) d'un composé d'allongement de chaîne,
e) d'un uréthanne-diol, consistant en le produit de réaction d'un carbonate cyclique et d'un composé contenant un groupe amino et un groupe supplémentaire choisi entre des groupes amino et hydroxy, ledit uréthanne-diol représentant jusqu'à 80 % en poids du polymère du type polyuréthanne.

2. Composition de revêtement suivant la revendication 1, **caractérisée en ce que** le groupement dispersant est non ionisable.

3. Composition de revêtement suivant la revendication 1, **caractérisée en ce que** le groupement dispersant est ionisable.

4. Composition de revêtement suivant l'une quelconque des revendications précédentes, **caractérisée en ce que** le polymère hybride polyuréthanne-polymère acrylique comprend 0,1 à 75 % en poids de polymère du type polyuréthanne et 25 à 99,9 % en poids du copolymère de monomères copolymérisables à insaturation éthylénique.

5. Composition de revêtement suivant l'une quelconque des revendications précédentes, **caractérisée en ce qu'**elle consiste en un revêtement de peinture.

6. Composition de revêtement suivant l'une quelconque des revendications précédentes, **caractérisée en ce que** le composé contenant un groupe amino et un groupe supplémentaire est choisi dans le groupe de composés comprenant des diamines, des alcanolamines et des polyamides à terminaison amine.

7. Composition de revêtement suivant l'une quelconque des revendications 1 à 5, **caractérisée en ce que** le composé contenant un groupe amino et un groupe supplémentaire est choisi dans le groupe de composés comprenant l'éthylènediamine, la 1,4-butanediamine, la 1,6-hexanediamine, l'éthanolamine et la propanolamine.

8. Composition de revêtement suivant l'une quelconque des revendications précédentes, **caractérisée en ce que** le carbonate cyclique est choisi dans le groupe consistant en carbonate de glycérol, carbonate d'éthylène, carbonate de propylène et carbonate de butylène.

9. Composition de revêtement suivant l'une quelconque des revendications précédentes, **caractérisée en ce que** le polyisocyanate est choisi dans le groupe comprenant le 1,6-hexanediisocyanate, l'isophorone-diisocyanate, le 4,4'-dicyclohexyl-méthane-diisocyanate, le toluène-diisocyanate et le méthylène-bis(phénylisocyanate).

10. Composition de revêtement suivant l'une quelconque des revendications précédentes, **caractérisée en ce que** le composé avec au moins deux groupements réactifs avec les groupements isocyanate du polyisocyanate est un polyol.

11. Composition de revêtement suivant la revendication 10, **caractérisée en ce que** le polyol est un polyester-polyol ou polyéther-polyol ayant un poids moléculaire de 300 à 10 000 daltons.

12. Composition de revêtement suivant l'une quelconque des revendications précédentes, **caractérisée en ce que** le composé contenant au moins un groupement dispersant et au moins un autre groupement réactif avec les groupements isocyanate du polyisocyanate est un acide dihydroxy-alcanoïque.

13. Composition de revêtement suivant l'une quelconque des revendications précédentes, **caractérisée en ce que** les monomères à insaturation éthylénique copolymérisables par addition comprennent les esters alkyliques d'acide acrylique et d'acide méthacrylique.

14. Composition de revêtement suivant l'une quelconque des revendications précédentes, **caractérisée en ce qu'**elle contient également des ingrédients choisis dans le groupe consistant en des modificateurs de rhéologie, des cires, des agents de réticulation, des dispersants, des adjuvants d'écoulement, des agents anti-mousses, des agents d'adhésivité, des plastifiants, des biocides, des pigments et des charges.

15. Dispersion aqueuse contenant des particules hybrides de polyuréthanne-polymère acrylique dispersées dans un milieu aqueux, contenant
i) un polymère du type polyuréthanne
ii) un copolymère de monomères à insaturation éthylénique copolymérisables par addition,
**caractérisée en ce que** le polymère du type polyuréthanne comprend le produit de réaction
a) d'un polyisocyanate,
b) d'un composé contenant au moins deux groupements réactifs avec les groupements isocyanate du polyisocyanate,
c) d'un composé contenant au moins un groupement dispersant et au moins un groupement réactif avec les groupements isocyanate du polyisocyanate,
d) d'un composé d'allongement de chaîne,
e) d'un uréthanne-diol, consistant en le produit de réaction d'un carbonate cyclique et d'un composé contenant un groupe amino et un groupe supplémentaire choisi entre des groupes amino et hydroxy, ledit uréthanne-diol représentant jusqu'à 80 % en poids du polymère du type polyuréthanne.

16. Procédé pour la préparation de la dispersion de la revendication 15, comprenant
(a) la formation dans un solvant d'un prépolymère d'uréthanne à fonctionnalité isocyanate qui contient également des groupements dispersants,
(b) la dilution du prépolymère d'uréthanne dans des monomères à insaturation éthylénique et la neutralisation avec une base,
(c) l'émulsionnement de la solution de prépolymère dans le monomère pour former une émulsion de gouttelettes ayant un diamètre inférieur à 1000 nm dispersées dans de l'eau,
(d) l'allongement de chaîne du prépolymère d'uréthanne à fonctionnalité isocyanate pour produire un polymère d'uréthanne de poids moléculaire plus élevé et
(e) la copolymérisation des monomères à insaturation éthylénique par polymérisation radicalaire.

17. Prépolymère d'uréthanne **caractérisé en ce qu'**il comprend le produit de réaction
a) d'un polyisocyanate,
b) d'un composé contenant au moins deux groupements réactifs avec les groupements isocyanate du polyisocyanate,
c) d'un composé contenant au moins un groupement acide et au moins un groupement réactif avec les groupements isocyanate du polyisocyanate,
d) d'un uréthanne-diol, consistant en le produit de réaction d'un carbonate cyclique et d'un composé contenant un groupe amino et un groupe supplémentaire choisi entre des groupes amino et hydroxy, ledit uréthanne-diol représentant jusqu'à 80 % en poids du prépolymère d'uréthanne.
